# EUROPEAN PATENT APPLICATION

(11) **EP 1 715 700 A1**
(43) Date of publication of application: **25.10.2006**
(21) Application number: 05741920.2
(22) Date of filing: 31.03.2005
(51) Int. Cl.: H04Q 7/28, H04Q 7/20, H04B 7/00, H04J 13/00

(54) **A METHOD FOR USER UPLINK PREEMPTING IN THE TRUNKED GROUP**

(30) Priority: 02.04.2004 CN 200410031674
(71) Applicant: Huawei Technologies Co., Ltd., Longgang District, Shenzhen, Guangdong 518129 (CN)
(72) Inventor: CHEN, De, Huawei Administration Building, Shenzhen, Guangdong 518129 (CN); CHENG, Jinneng, Huawei Administration Building, Shenzhen, Guangdong 518129 (CN)
(74) Representative: Manitz, Finsterwald & Partner GbR
(86) International application number: PCT/CN2005/000426
(87) International publication number: WO 2005/096645

(57) **Abstract**

The present invention discloses a method of uplink preemption for users in the trunking group, the trunking system network side allocates uplink and downlink group call channels for the group call trunking group, and allocates a dedicated channel for the speaker in the trunking group, the method further comprises: when desiring to speak, a user initiates an UPLINK ACCESS message to the trunking system network side on the allocated group call channel uplink; the trunking system network side which receives the UPLINK ACCESS message releases the dedicated channel allocated for the speaker, and takes the speaker as a listener listening to the group call channel downlink allocated for the trunking group; the trunking system network side allocates a free uplink channel to the user who initiated the UPLINK ACCESS message as his dedicated channel; the user who initiated the UPLINK ACCESS message speaks on the dedicated channel as the current speaker.

## Description

### Field of the Technology

The invention relates to the technique of uplink channel preemption in the wireless trunking communication system, more specifically to an uplink preemption method for users in trunking group.

### Background of the Invention

Wireless trunking communication system, referred to as trunking system, is one of the relatively economical and flexible communication systems for management and control developed in recent years. It is widely used in the governmental organizations, airports, harbors, factories and enterprises etc., to satisfy the need for internal communication.

The basic service of a trunking system is the Voice Group Call Service (VGCS). VGCS provides the service that one user can call multiple users who belong to a designated service area and have the same group ID in a trunking group, wherein the service area consists of several cells belong to one Mobile Switching Center (MSC) or different MSCs. The VGCS operates in half-duplex mode. During a call, any user in the trunking group may be the speaker but only one user is allowed to speak at one moment while other members of the trunking group are listeners.

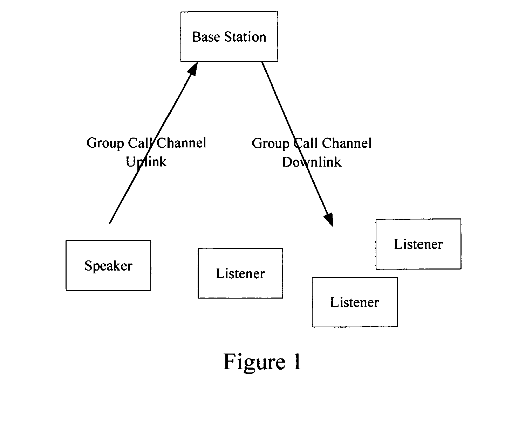

### Figure 1 is a schematic diagram illustrating a group call procedure in the prior art:

Suppose that all users in a trunking group belong to one base station. Group call channel uplink and downlink are assigned to the users in a trunking group when the trunking group sets up a group call. One of the users in the group speaks as the current speaker in group transmitting mode on the uplink channel of the assigned group call channels, and other users in the group listen to the speaker as listeners in group receiving mode on the downlink channel of the assigned group call channels. Configuration messages of a group call channel are broadcast on the downlink channel, e.g., the Notification Channel (NCH).

Users in a trunking system may belong to different trunking groups and different groups have different priorities. Within a trunking group, in order to render the following different service characteristics to different users, different users in a trunking group are configured with different priorities:
1. Users with different priorities in a trunking group have different parameters configured during a random access, e.g., the repeating times configured for transmission are different, the time intervals configured for retransmission are different, etc., which lead to different success rates of access;
2. When users with different priorities in a trunking group initiate an uplink access at the same time, the trunking system will make decision based on their priorities, and assign an uplink channel first for the user with a higher priority;
3. When a user with a lower priority in the trunking group is speaking on the uplink channel, users with higher priorities can interrupt the voice of the user with lower priority and speak by preempting the uplink channel.

It is easier to implement the above first two characteristics, just through setting different priorities to different users in a trunking group, the trunking system will process according to the priority which is assigned during the process of the user's uplink access or random access. However, it is difficult to realize the third characteristic presently.

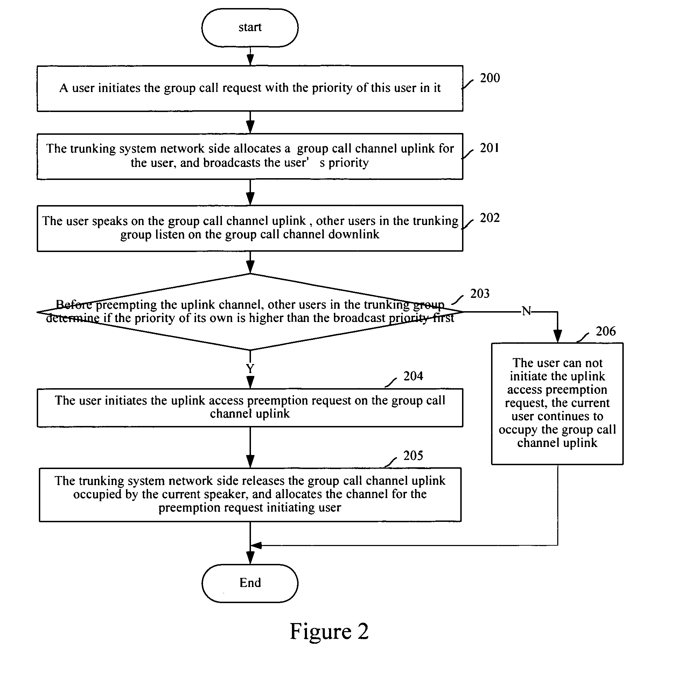

At present, the flowchart of the method for a higher priority user to preempt the group call channel uplink is shown as Figure 2. The priorities are pre-set for each user, the priority and the trunking Group ID of each user are written into the User Identity Module (SIM) of the user, and the trunking System network side can set or modify user's priority through air interface. Steps of the procedure are as follows:
Step 200, the user presses the Push To Talk (PTT) key to initiate a voice group call request with the user's priority in it, the voice group call request is transferred to the trunking System network side through a layer 3 message.
The Step 200 can be executed during establishment of a group call or after the group call established, i.e., an uplink and a downlink channel have been allocated and an UPLINK FREE message has been broadcast on the NCH.
Step 201, when receiving the request which is initiated during the establishment of the group call, the trunking system network side allocates group call channel uplink and downlink to the group call area of the trunking group where the user is located, and allocates the group call channel uplink to the user; if the request is initiated after the group call is established, the group call channel uplink is directly allocated to the user.

Having allocated the group call channel uplink to the user, the trunking system network side broadcasts an UPLINK BUSY message with the priority of the user who occupied the group call channel uplink on the NCH.
Step 202, the user who initiated the voice group call request speaks on the group call channel uplink, and other users in the group listen to the group call channel downlink.
Step 203, when another user wants to preempt the group call channel uplink, the user determines whether his priority is higher than that broadcast by the trunking system network side, if yes, go to Step 204; otherwise, go to Step 206.
Step 204, the user initiates an uplink access preemption request to the trunking system network side through random access procedure on the group call channel uplink.
Step 205, Having received the request, the trunking system network side releases the current group call channel uplink which is occupied by the group call channel uplink user, allocates the group call channel uplink to the user who initiated the preemption request, and broadcasts the UPLINK BUSY message with the priority of the preemption request user in it on the NCH, then the user initiated the preemption can speak on the group call channel uplink.
Step 206, the user can not initiate an uplink access preemption request to the trunking system network side through random access procedure on the group call channel uplink, the user who currently occupies the group call channel uplink keeps occupying the group call channel uplink.

It can be seen from the above solution, although the solution showed in Figure 2 defines different priorities for different users in the trunking group, and also prescribes that the user with higher priority in the trunking group can preempt the group call channel uplink, when the user with higher priority preempts the group call channel uplink under the same Base Station, he must initiate an preemption request to the trunking system network side on the group call channel uplink on which the user with lower priority is speaking, i.e., the Step 204, since the trunking system network side is processing the voice of the lower priority user, i.e., is processing the voice received on the group call channel uplink and sending it to other users in the trunking group on the group call channel downlink, the trunking system network side can not correctly receive and demodulate the preemption request sent on the group call channel uplink at the same time, no matter how high the user's priority is. Therefore, the procedure of group call channel uplink preemption by the user in the trunking group can not be realized. Furthermore, the procedure of group call channel uplink preemption by the higher priority user in the trunking group can not be realized.

### Summary of the Invention

In view of the above, the invention is to provide a method of uplink preemption for the user in trunking group, and this method makes it possible that users, especially higher priority users in the trunking group can successfully preempt the uplink channel, and speaks as a speaker.

The technique solution in accordance with this invention is as follows:

A method of uplink preemption for users in a trunking group, the trunking system network side allocates the uplink and downlink group call channels for the trunking group when the group call is set up, and allocates dedicated uplink channel for the speaker in the trunking group to speak, further comprises:
when desiring to speak, a user initiates an UPLINK ACCESS message to the trunking system network side on the allocated group call channel uplink;
the trunking system network side which received the UPLINK ACCESS message releasing the dedicated channel allocated for the speaker, and taking the speaker as a listener listening to the group call channel downlink allocated for the trunking group;
the trunking system network side allocating a free uplink channel to the user who initiates the UPLINK ACCESS message as his dedicated channel;
the user who initiates the UPLINK ACCESS message speaking on the allocated dedicated channel as the current speaker.
the user who initiated the UPLINK ACCESS message speaks on the dedicated channel as the current speaker.

The method further includes:
after receiving the UPLINK ACCESS message, the trunking system network side responding to the message;
before the trunking system network side allocating a free uplink channel to the user who initiates the UPLINK ACCESS message, the method further includes:
the user who initiates the UPLINK ACCESS message sending a layer 3 TALKER INDICATION message to the trunking system network side.

Wherein, different priorities are set for different users in the trunking group, the method further includes: the trunking system network side broadcasting the UPLINK BUSY message that carries the highest priority of the trunking group.

Different priorities are set for the users in the trunking group respectively, before the user initiating the UPLINK ACCESS message to the trunking system network side, the method further includes:
the user who initiates the UPLINK ACCESS message in the trunking group determining if its configured priority is higher than that of the current speaker, if yes, execute the subsequent steps; otherwise, the user can not initiate an ACCESS message, end the procedure.

Different priorities are set for the users in the trunking group respectively, the UPLINK ACCESS message carrying the initiating user's priority in it;
the trunking system networks side that received the UPLINK ACCESS message determining if the priority of the initiating user is higher than that of the current speaker, if yes, execute the subsequent steps; otherwise, nothing is done by the trunking system network side, end the procedure.

Wherein, the procedure of allocating dedicated channel for the speaker in the trunking group to speak includes the following steps:
the speaker initiating an UPLINK ACCESS message on the allocated group call channel uplink to the trunking system network side;
the trunking system network side allocating a free uplink channel for the speaker as a dedicated channel to speak.

Wherein, the UPLINK BUSY message is broadcast on a Notification Channel (NCH).

The procedure of allocating dedicated channel for the speaker in the trunking group is executed during the process of access or uplink preemption.

The free uplink channel allocated for the listener is the released dedicated group call channel uplink allocated for the speaker.

It can be seen from the above method, the trunking system network side in this invention allocates group call channel uplink and downlink for the group call trunking group, and allocates a dedicated channel for the speaker in the trunking group, so that the user with higher priority in the trunking group, i.e., the user whose priority is higher than the speaker's, can initiate uplink preemption request on the group call channel uplink of the pre-allocated uplink and downlink group call channels, not as the method in the prior art that the uplink preemption request of the initiating user shares the same group call channel uplink to get access to the trunking system network side with the voice of the speaker. thereby, it is possible that the trunking system network side can correctly receive and demodulate both the voice of the speaker on the dedicated group call channel and the preemption request initiated by the user on the group call channel uplink of the pre-allocated uplink and downlink group call channels, realizing the procedure of the user with higher priority preempting the group call channel uplink at last. Thus the method makes it possible that the users, especially those with higher priority, can successfully preempt the uplink channel, and speak as a speaker on the uplink channel.

### Brief Description of the Drawings

Figure 1 is the schematic diagram illustrating the group call process in the prior art;
Figure 2 is the flowchart of the method of group call channel uplink preemption by higher priority user in the trunking group in the prior art;
Figure 3 is the flowchart of the embodiment of the procedure of establishing group call in the trunking group in this invention;
Figure 4 is the flowchart of the embodiment of the procedure of uplink access of the users in the trunking group in this invention;
Figure 5 is the flowchart of the embodiment of the procedure of uplink preemption by higher priority user in the trunking group in this invention;
Figure 6 shows a diagram of the procedure of uplink preemption by higher priority user in the trunking group in this invention.

### Detailed Description of the Invention

In order to make the solution and the merits of this invention clearer, a further description in detail is given hereinafter with reference to specific embodiments and the accompanying drawings.

The trunking system network side in the embodiments of this invention allocates dedicated channel for the user who initiates the group call in the trunking group, and allocates group call channel uplink and downlink for other users in the trunking group. When another user in the trunking group initiates an uplink preemption request, the request will be sent to the trunking system network side on the allocated group call channel uplink instead of the dedicated channel that has been occupied by the group call initiating user, thereby it is possible that the trunking system network side can receive the uplink preemption, and process the preemption of uplink group call channel for the user who initiated the uplink group call.

Different priorities are set for different users in the trunking group respectively in the embodiments of this invention, the priority and the trunking Group ID of each user are written into the User Identification Module (SIM) of the user, and the trunking System network side can set or modify user's priority through air interface.

The method of this invention includes three basic procedures, procedure of establishing the group call in the trunking group, procedure of uplink access of the user in the trunking group, and the procedure of preemption by another user in the trunking group. The three basic procedures will be described respectively thereinafter by taking the trunking group that belongs to different Base Station System (BSS) in one MSC as an example.

### 1. The procedure of establishing group call in the trunking group:

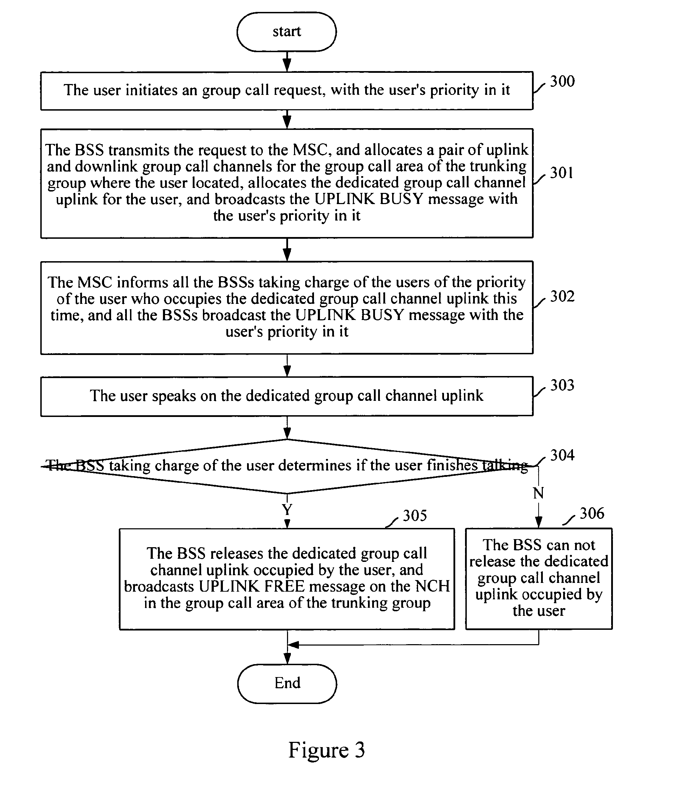

As shown in figure 3, figure 3 is the flowchart of establishing group call in the trunking group of this invention, includes the following steps:
Step 300, a user in the trunking group pushes down the PTT key, initiates and reports the voice group call request that contains the user's priority to the BSS taking charge of the user;
Step 301, after receiving the request, the BSS forwards the request to the MSC taking charge of the trunking group, allocates group call channel uplink and downlink for the group call area of the trunking group where the user is located, and allocates a dedicated channel for the user, and broadcasts the UPLINK BUSY message on the NCH, with the priority of the user who occupies the group call channel uplink in the message.
Step 302, the MSC informs all the BSSs taking charge of the group trunking of the priority of the user who occupies the dedicated channel currently by the UPLINK BUSY message, and the BSS that received this message broadcast the UPLINK BUSY message on the NCH, with the priority of the user who occupies the dedicated channel in the message.
Step 303, the user who initiated the voice group call request speaks on the dedicated channel, other users in the group listen to the group call channel downlink.
Step 304, the BSS taking charge of the user who initiated the voice group call request determines if the user finishes speaking, i.e., determines if the user releases the PTT key, if yes, goes to step 305; otherwise, goes to step 306;
Step 305, the BSS taking charge of the user who initiated the voice group call request releases the dedicated channel occupied by the user, broadcasts the UPLINK FREE message on the NCH in the group call area of the trunking group through MSC;
Step 306, the BSS taking charge of the voice group call request does not release the dedicated channel occupied by the user, other users with higher priority in the trunking group need uplink preemption to speak.

### 2. The procedure of uplink access of users in the trunking group:

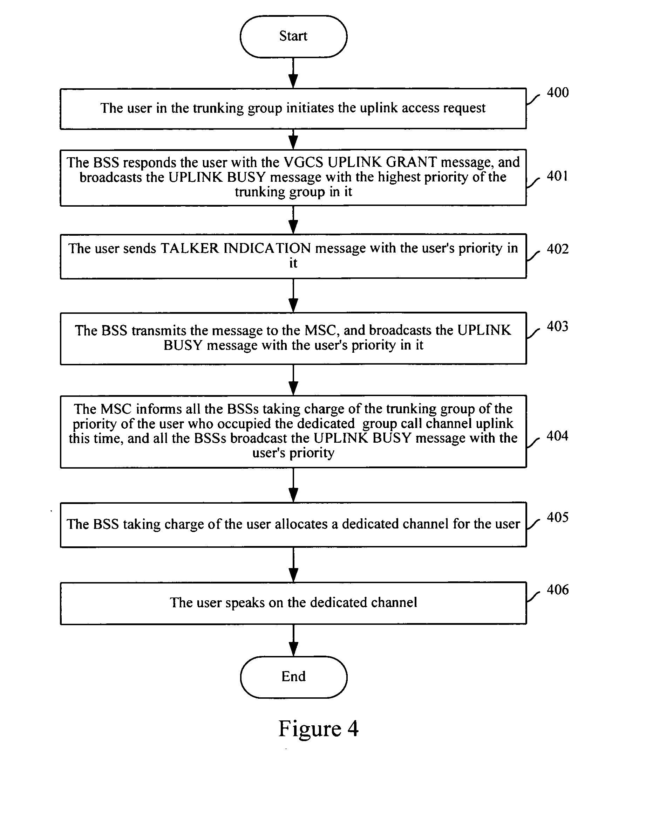

When trunking system network side broadcasts the UPLINK FREE message, users in the trunking group can take the process of uplink access, as shown in figure 4:
Step 400, a user in the trunking group initiates an UPLINK ACCESS message to the BSS taking charge of the user on the group call channel uplink of the pre-allocated uplink and downlink group call channels through random access process;
Step 401, after receiving the UPLINK ACCESS message, the BSS responds to the user with a VGCS UPLINK GRANT message, and broadcasts the UPLINK BUSY message on the NCH, with the highest priority of the trunking group in the message to avoid other users in the trunking group preempting uplink channel at the moment.
Step 402, the user sends the layer 3 TALKER INDICATION message to the BSS, with the user's priority in the message.
Step 403, after receiving the message, the BSS broadcasts the UPLINK BUSY message that carries the user's priority on the NCH, and forwards the message to the MSC taking charge of the trunking group.
Step 404, the MSC informs all the BSSs taking charge of the group trunking of the priority of the user who occupies the dedicated channel currently by the UPLINK BUSY message, and the BSS that received this message broadcasts the UPLINK BUSY message on the NCH, with the priority of the user who occupies the dedicated channel in the message.
Step 405, the BSS taking charge of the user who initiated the UPLINK ACCESS message starts up the flow of group call channel modification, allocates to the user a free uplink channel as the user's dedicated channel.
Step 406, the user speaks on the dedicated channel, other users in the trunking group listen to the group call channel downlink of the pre-allocated uplink and downlink group call channels allocated when the group call was set up.

### 3. The procedure of uplink preemption by another user in the trunking group:

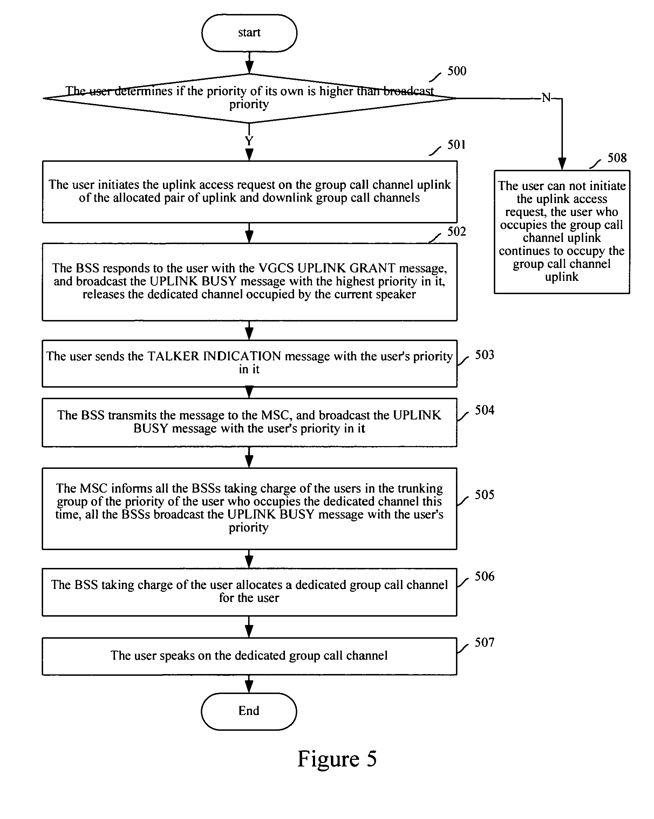

When the trunking system network side does not release the dedicated channel occupied by the speaker, other higher priority users in the trunking group need uplink preemption to speak, the procedure is as shown in figure 5:
Step 500, the user who will initiate an uplink preemption determines if its own priority is higher than the broadcast priority he received, if yes, goes to step 501; otherwise, goes to step 508.
Step 501, the user initiates an UPLINK ACCESS message to the BSS taking charge of the user on the group call channel uplink of the pre-allocated uplink and downlink group call channels through random access process.
Step 502, after receiving the UPLINK ACCESS message, the BSS sends to the user the VGCS UPLINK GRANT message, and releases the dedicated channel occupied by the current speaker through the trunking system network side, broadcasts the UPLINK BUSY message on the NCH, with the highest priority of the trunking group in the message to avoid other users making uplink preemption at the moment.

Having received the UPLINK ACCESS message, the BSS can determine if the priority carried in the message is higher than that of the user who occupies the dedicated channel, if yes, continues with the following steps; otherwise, ends the procedure, this step is not illustrated in the flowchart.
Step 503, the user sends a TALKER INDICATION to the BSS, with the user's priority in the message.
Step 504, after receiving the message, the BSS broadcasts the UPLINK BUSY message on the NCH, with the user's priority in the message, and forwards the message to the MSC taking charge of the trunking group.
Step 505, the MSC informs all the BSSs taking charge of the trunking group of the priority of the user who occupies the dedicated channel currently by the UPLINK BUSY message, and the BSS that received this message broadcasts the UPLINK BUSY message on the NCH, with the priority of the user who occupies the dedicated channel in the message.
Step 506, the BSS taking charge of the user who initiated the UPLINK ACCESS message starts up the flow of group call channel modification, allocates to the user a free uplink channel as the user's dedicated channel.
Step 507, the user speaks on the dedicated channel, other users in the trunking group listen to the group call channel downlink of the pre-allocated uplink and downlink group call channels allocated when the group call was set up.
Step 508, the user can not initiate the uplink ACCESS message to the trunking system network side, the current speaker keeps occupying the dedicated channel, and ends the procedure.

The dedicated channel allocated in step 506 can be the dedicated channel released in step 502. It also can be a free uplink channel allocated by the BSS taking charge of the user who initiated the UPLINK ACCESS message instead of the dedicated channel released in step 502, however, it is prerequisite that the dedicated channel has been released in step 502, and makes sure that only one dedicated channel is allocated in the trunking group.

When the priority of the user who wants to initiate uplink preemption is lower than the received broadcast priority of the speaker, the user can not initiate the process of uplink preemption, the mobile station of the user can inform the user that the uplink is occupied by a higher priority user in the trunking group through man-machine interface.

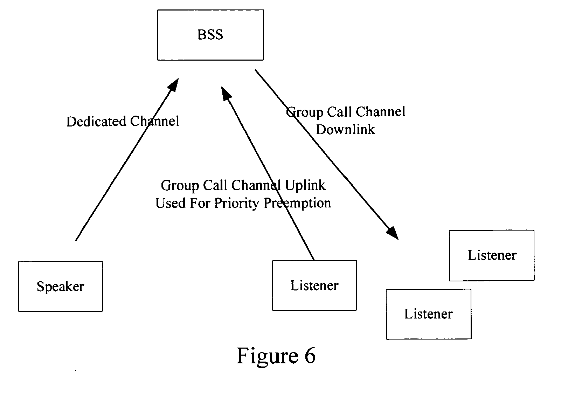

Figure 6 is the diagram of the procedure of uplink preemption by a higher priority user in the trunking group in the embodiment of this invention: suppose that the current speaker and listeners in the trunking group belong to one BSS, the current speaker speaks on the dedicated channel, and the current listeners listen to the group call channel downlink of the uplink and downlink group call channels pre-allocated by the trunking system, when a user with higher priority initiates an uplink preemption, the uplink preemption request is sent to the BSS on the group call channel uplink of the pre-allocated uplink and downlink group call channels, and the uplink preemption of the user who initiated the uplink preemption request is realized by the BSS, such that the user can speak on the uplink channel now. For the reason that the uplink preemption request of another user does not share the same group channel uplink with the voice of the speaker, it is possible that the trunking system network side can correctly receive and demodulate the voice of the speaker on the dedicated group call channel, and the preemption request initiated by another user on the group call channel uplink of the pre-allocated uplink and downlink group call channels simultaneously, and realize the procedure of preempting the group call channel uplink by the user with higher priority at last.

The foregoing descriptions are only preferred embodiments of this invention and are not used for limiting the protection scope of this invention. Any modification, equivalent substitution, improvement, etc. within the spirit and principle of this invention should be covered by the protection scope of this invention.

## Claims

1. A method of uplink preemption by users in a trunking group, group call channel uplink and downlink being allocated for the trunking group by trunking system network side when a group call of the trunking group was set up, wherein, allocating a dedicated channel for a speaker in the trunking group to speak, further comprising:
When desiring to speak, a user initiating an UPLINK ACCESS message to the trunking system network side on the allocated group call channel uplink;
the trunking system network side which received the UPLINK ACCESS message releasing the dedicated channel allocated for the speaker, and taking the speaker as a listener listening to the group call channel downlink allocated for the trunking group;
the trunking system network side allocating a free uplink channel to the user who initiates the UPLINK ACCESS message as his dedicated channel;
the user who initiates the UPLINK ACCESS message speaking on the allocated dedicated channel as the current speaker.

2. The method according to claim 1, further comprising:
after receiving the UPLINK ACCESS message, the trunking system network side responding to the message;
before the trunking system network side allocating a free uplink channel to the user who initiates the UPLINK ACCESS message, the method further comprising:
the user who initiates the UPLINK ACCESS message sending a layer 3 TALKER INDICATION message to the trunking system network side.

3. The method according to claim 1, wherein different priorities are set for different users in the trunking group, further comprising: the trunking system network side broadcasting the UPLINK BUSY message that carries the highest priority of the trunking group.

4. The method according to claim 1, different priorities are set for the users in the trunking group respectively, before the user initiating the UPLINK ACCESS message to the trunking system network side, the method further comprising:
the user who initiates the UPLINK ACCESS message in the trunking group determining if its configured priority is higher than that of the current speaker, if yes, executing the subsequent steps; otherwise, the user can not initiate an ACCESS message, ending the procedure.

5. The method according to claim 1, different priorities are set for the users in the trunking group respectively, the UPLINK ACCESS message carrying the initiating user's priority in it;
the trunking system networks side that received the UPLINK ACCESS message determining if the priority of the initiating user is higher than that of the current speaker, if yes, executing the subsequent steps; otherwise, nothing is done by the trunking system network side, ending the procedure.

6. The method according to claim 1, wherein, the procedure of allocating dedicated channel for the speaker in the trunking group to speak comprises the following steps:
the speaker initiating an UPLINK ACCESS message on the allocated group call channel uplink to the trunking system network side;
the trunking system network side allocating a free uplink channel for the speaker as a dedicated channel to speak.

7. The method according to claim 3, wherein the UPLINK BUSY message is broadcast on a Notification Channel (NCH).

8. The method according to claim 1, wherein the procedure of allocating dedicated channel for the speaker in the trunking group is executed during the process of access or uplink preemption.

9. The method according to claim 1, wherein the free uplink channel allocated for the initiating user is the released dedicated channel allocated for the speaker.
